# EUROPEAN PATENT SPECIFICATION

(11) **EP 3 557 103 B1**
(45) Date of publication and mention of the grant of the patent: **25.11.2020**
(21) Application number: 18461550.8
(22) Date of filing: 19.04.2018
(51) Int. Cl.: F16K 27/02, F15B 13/043, F16K 31/06

(54) **FLAPPER SERVO VALVE NOZZLE HOUSING**
KLAPPENSERVOVENTILDÜSENGEHÄUSE
BOÎTIER DE BUSE DE SERVOVANNE À CLAPET

(43) Date of publication of application: 23.10.2019
(73) Proprietor: Hamilton Sundstrand Corporation, Charlotte, NC 28217 (US)
(72) Inventor: BUJEWICZ, Maciej, 54-436 Wroclaw (PL); LOWICKI, Jan, 50-382 Wroclaw (PL)
(74) Representative: Dehns

(56) References cited:
- EP-A1- 3 006 798
- EP-A1- 3 048 348
- EP-A1- 3 205 913
- CN-A- 101 725 746
- US-A- 3 029 830
- US-A- 3 489 179
- US-A- 3 556 150
- US-A- 3 698 437
- US-A- 3 892 260

## Description

### TECHNICAL FIELD

This disclosure relates to a nozzle housing for a flapper servo valve. This disclosure also relates to a flapper servo valve and a method of positioning a nozzle in a flapper servo valve.

### BACKGROUND

Flapper servo valves are well-known in the art and can be used to control the flow of hydraulic fluid to an actuator via a spool valve. Typically, a flapper is deflected by an armature connected to an electric motor away or towards nozzles, which control fluid flow to the spool valve. Deflection of the flapper can control the amount of fluid injected from the nozzles, and thus the amount of fluid communicated to the actuator via the spool valve. In this way, servo valves can allow precise control of actuator movement.

Flapper servo valves include a housing that houses the components in cavities therein. The nozzles are normally separately formed and then interference fitted into a nozzle cavity within the housing, and their position is carefully calibrated to ensure accurate operation of the servo valve. In order to calibrate the positioning of the nozzle, the nozzle is moved axially within the cavity, usually using a calibration tool. Due to the tight tolerance needed for the interference fit, the nozzle edges can sometimes interfere with the surface of the cavity during axial movement of the nozzle. This can cause scraping off of some material from the cavity surface or the nozzle, which can cause contamination in the servo valve that can get between the nozzles and the flapper and prevent accurate control of the servo valve, or cause a complete malfunction. If the nozzle material is harder than the surrounding housing material (or vice versa), this problem can be more acute, as the softer material may be scraped off more easily.

A prior art nozzle housing for a flapper servo valve having the features of the preamble to claim 1 is disclosed in US 3,489,179. Another prior art nozzle housing having a plurality of cylindrical portions with varying diameters is disclosed in US 3,556,150.

### SUMMARY

From one aspect, the present disclosure relates to a nozzle housing for a flapper servo valve in accordance with claim 1.

In certain embodiments of the above nozzle housing, the first cylindrical portion is adjacent the first open end, and either extends directly therefrom or is connected thereto via another portion (e.g. such as a threaded portion, which may be used to receive a housing plug and/or calibration tool). In addition or alternatively, the second cylindrical portion is at or adjacent the second open end and may extend directly therefrom.

By "operating position" it is meant the final position in which a nozzle is fixed for operation when used in a flapper servo valve. As will be understood by the skilled person, a nozzle in its operating position will generally be fixed in position near or at the second open end, proximate the flapper cavity. Such positioning provides reliable metered communication of fluid to the flapper of the flapper servo valve.

By "configured to hold" it is meant that the relative dimensions of the nozzle and the second cylindrical portion are suitable to provide an interference fit therebetween. As will be understood by the skilled person, this may mean the diameters of the nozzle and second cylindrical portion are substantially similar, or that the nozzle has a slightly larger diameter than the second cylindrical portion, for example, 3-10µm larger.

By "cylindrical portion" it is meant that the portions have a substantially fixed diameter along their axial length. By "substantially" it is meant that the diameter may vary along the axial length due to standard manufacturing tolerances. It is to be understood that within the scope of this disclosure the cylindrical portions may be interrupted by certain variations, such as apertures or ports opening into the portions, without depriving them of cylindrical character.

By "transition portion" it is meant that the portions provide a transition between the diameters of different cylindrical portions. In other words, the diameter of the nozzle cavity decreases across the axial length of the transition portion.

In further embodiments of any of the above nozzle housings, the first and second transition portions comprise a chamfer. In other words, the diameter of the nozzle cavity decreases linearly across the axial length of the transition portion. In other embodiments, the transition portions are a rounded surface or are a step transition. In such embodiments, the diameter of the nozzle cavity decreases nonlinearly across the axial length of the transition portions.

In further embodiments of any of the above nozzle housings, the nozzle housing further comprises a fluid port that opens to the third cylindrical portion to allow communication of fluid to the nozzle cavity.

In further embodiments of any of the above nozzle housings, the axial length of the first cylindrical portion is between 50-75% of the axial length of the second cylindrical portion, and the third cylindrical portion is between 30-60% of the axial length of the second cylindrical portion. These axial lengths ensure a nozzle can be easily inserted into the nozzle cavity, without undue misalignment, and that the nozzle will be successfully aligned by the third cylindrical portion, without encroaching on the axial length of the second cylindrical portion.

In further embodiments of any of the above nozzle housings, at least a portion of the surface of the nozzle cavity is anodised for reducing friction between a nozzle and the nozzle cavity during insertion and positioning of the nozzle in the nozzle cavity.

In further embodiments of any of the above nozzle housings, the nozzle housing comprises aluminium.

From another aspect, the present disclosure relates to a flapper servo valve. The flapper servo valve comprises the nozzle housing of any of the above discussed embodiments and a nozzle disposed within the nozzle cavity.

In an embodiment of the above flapper servo valve, the nozzle comprises a harder material than the nozzle housing.

In a further embodiment of either of the above flapper servo valves, the nozzle comprises stainless steel, and in one specific example, comprises stainless steel 304.

In a further embodiment of any of the above flapper servo valves, at least a portion of the surface of the nozzle is anodised for reducing friction between the nozzle and the nozzle cavity during insertion and positioning of the nozzle in the nozzle cavity.

In a further embodiment of any of the above flapper servo valves, the flapper servo valve further comprises a flapper disposed in the flapper cavity. In additional embodiments, the flapper is operatively connected to an armature, which is configured to rotate and move the flapper in response to an input, such as known in the art.

In a further embodiment of any of the above flapper servo valves, the flapper servo valve further comprises a second nozzle cavity at an opposing side of the flapper cavity to the first nozzle cavity, and a second nozzle disposed in the second nozzle cavity.

From yet another aspect, the present disclosure relates to a method of positioning a nozzle in the flapper servo valve of any of the above embodiments. The method comprises inserting the nozzle into the nozzle cavity via the first open end, and moving the nozzle axially through the nozzle cavity from the first cylindrical portion to the second cylindrical portion via the third cylindrical portion, wherein the third cylindrical portion acts as a guide to axially align the nozzle with the second cylindrical portion during the moving.

In an embodiment of the above method, the method further comprises the step of interference fitting the nozzle in the second cylindrical portion to hold the nozzle in its operating position.

In a further embodiment of the above method, the step of interference fitting the nozzle in the second cylindrical portion comprises using a calibration tool. Such calibration tools are well-known to the skilled person and one such tool is known from EP 3,205,913.

### BRIEF DESCRIPTION OF DRAWINGS

Some exemplary embodiments of the present disclosure will now be described by way of example only, and with reference to the following drawings in which:
Figure 1 shows an example of a flapper servo valve.
Figure 2a shows a detailed cross-sectional view of a portion of a prior art nozzle housing of a flapper servo valve.
Figure 2b shows a nozzle inserted into the first portion of the nozzle cavity of Figure 2a.
Figure 2c shows a nozzle in its final operating position in the second portion of the nozzle cavity of Figure 2a.
Figure 3a shows a detailed cross-sectional view of a portion of a nozzle housing for a flapper servo valve in accordance with embodiments of the present disclosure;
Figure 3b shows a nozzle inserted into the first and intermediate portions of the nozzle cavity of Figure 3a.
Figure 3c shows a nozzle in its final operating position in the second portion of the nozzle cavity of Figure 3a.

### DETAILED DESCRIPTION

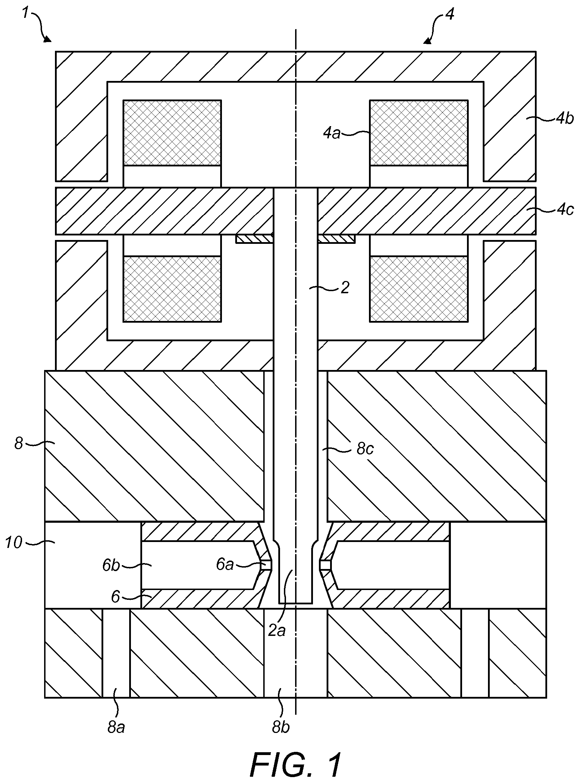

With reference to Figure 1, a prior art flapper servo valve 1 is illustrated. Servo valve 1 comprises an electric motor 4, flapper 2, a pair of nozzles 6 and nozzle housing 8. The electric motor 4 comprises coils 4a, permanent magnets 4b and armature 4c. The coils 4a are in electrical communication with an electrical supply (not shown) and when activated, interact with the permanent magnets 4b to move armature 4c, as is well-known in the art. Flapper 2 is disposed in a flapper cavity 8c in the housing 8 and is attached to an armature 4c, and is deflected by movement of the armature 4c. Nozzles 6 are housed within nozzle housing 8 in a respective nozzle cavity 10, via an interference fit therewith, and comprise a fluid outlet 6a and fluid inlet 6b. Housing 8 also has a port 8a, which allows communication of fluid to the nozzles 6. The flapper 2 comprises a blocking element 2a at an end thereof which interacts with fluid outlets 6a of nozzles 6 to provide metering of fluid from the fluid outlets 6a to a fluid port 8b in the housing 8, which allows communication of metered fluid from the nozzles 6 to an actuator via a spool valve input (not shown). As is known in the art, the electric motor 4 is used to control deflection of the blocking element 2a and vary the fluid delivered to the actuator from nozzles 6.

Although a pair of nozzles 6 and nozzle cavities 10 are shown in Figure 1, it is to be understood that only one such nozzle 6 and cavity 10 need be present in some embodiments. An opposing nozzle and cavity may not be necessary in certain designs or another fluid flow control mechanism could be used in place of the second nozzle 6 and/or cavity 10.

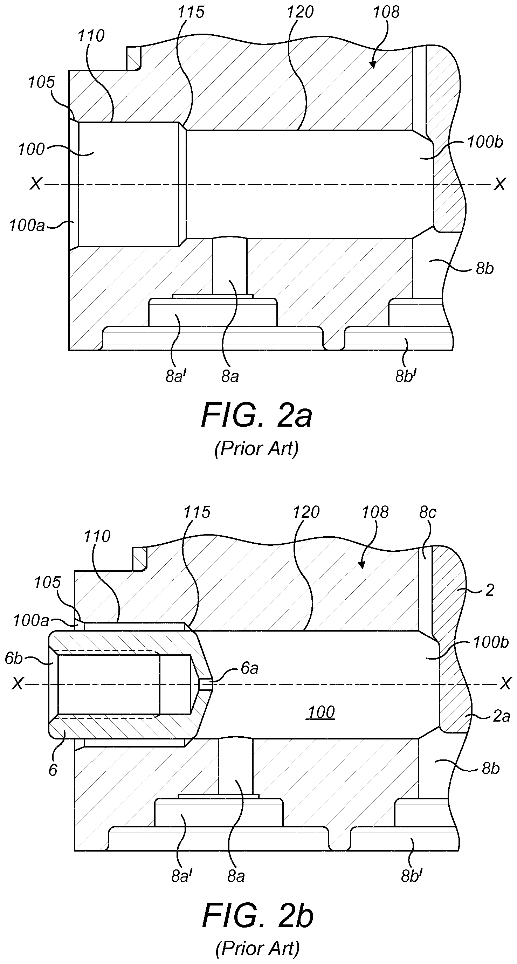

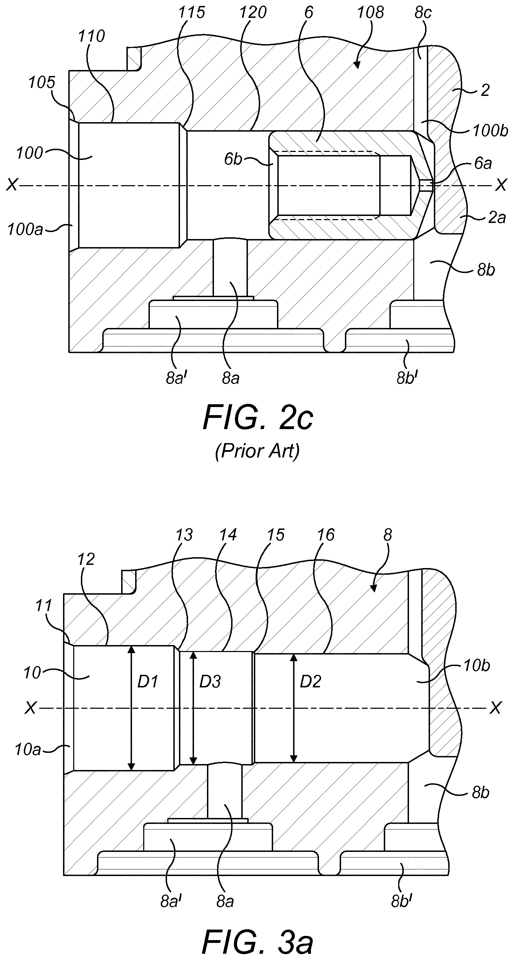

With reference to Figures 2a-2c, a portion of a prior art nozzle housing 108 comprises a nozzle cavity 100 having opposing first and second open ends 100a, 100b. The nozzle housing 108 has inlet fluid ports 8a' and 8a for communicating control fluid to the nozzle cavity 100 and outlet fluid ports 8b, 8b' for communicating control fluid to a downstream assembly, such as a spool valve (not shown), as explained with reference to Figure 1.

The nozzle cavity comprises a first cylindrical portion 110 and a second cylindrical portion 120 connected by a transition portion 115. First and second cylindrical portions 110, 120 are coaxial and are centred along central nozzle cavity axis X. The first cylindrical portion 110 has a larger diameter than the second cylindrical portion 120 and the nozzle 6, for example, 10-15% larger and is designed to receive the nozzle 6 from the first open end 100a. The smaller diameter second cylindrical portion 120 is a similar diameter to that of the nozzle 6, and once the nozzle 6 has been moved in to the appropriate operating position therein, the second cylindrical portion 120 is used to provide an interference fit with the nozzle 6 to hold it in place during use. The change in diameter from the first and second cylindrical portions 110, 120 is quite abrupt, and if the nozzle 6 is inserted off-axis (i.e. not exactly parallel to the nozzle cavity axis X) the nozzle 6 can interfere with the nozzle cavity surface and can scrape off material from the nozzle housing 108, (or from the nozzle 6) which can then become trapped in the nozzle cavity 10. This can lead to contamination or malfunction of a flapper servo valve comprising the nozzle housing 108.

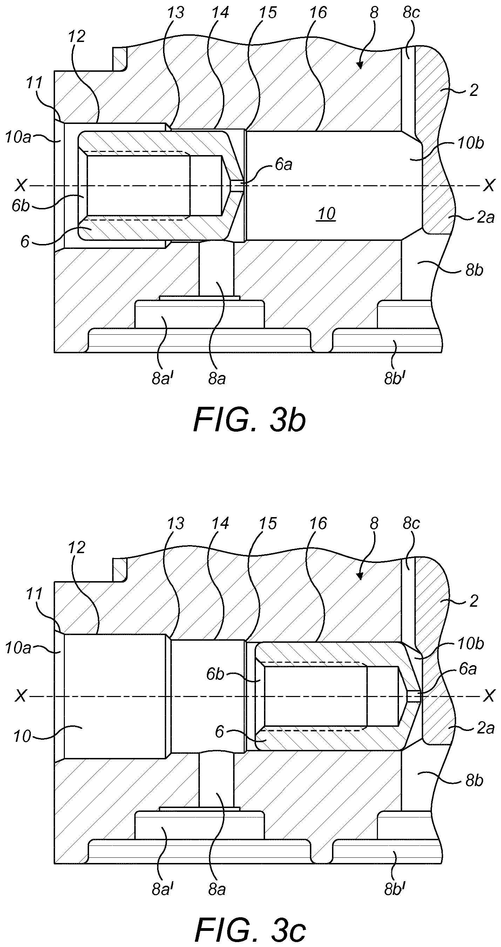

With reference to Figures 3a-3c, a portion of a nozzle housing 8 in accordance with embodiments of the present disclosure comprises a nozzle cavity 10 for housing a nozzle 6 having a first open end 10a and an opposing, second open end 10b and a flapper cavity 8c for housing a flapper 2. The first open end 10a opens to the exterior of the nozzle housing 8 and the second open end 10b opens into the flapper cavity 8c. The nozzle housing 8 also has inlet fluid ports 8a' and 8a for communicating control fluid to the nozzle cavity 10 and outlet fluid ports 8b, 8b' for communicating control fluid to a downstream assembly, such as a spool valve (not shown) as explained with reference to Figure 1.

The nozzle cavity 10 comprises a first cylindrical portion 12, a second cylindrical portion 16 and a third cylindrical portion 14 positioned therebetween. First, second and third cylindrical portions 12, 14, 16 are coaxial, and are centred along central nozzle cavity axis X. The first cylindrical portion 12 receives the nozzle 6 inserted into the nozzle cavity 10 from the first open end 10a, the second cylindrical portion 16 is configured to hold the nozzle in its operating position (such as described above in relation to Figures 2a-2c), and the third cylindrical portion 14 is configured to centre the nozzle 6 ahead of its movement into the second cylindrical portion 16 (as shown in Figure 3b). In other words, third cylindrical portion 14 acts as a guide to correctly align nozzle 6 with the second cylindrical portion 16 to avoid or reduce the aforementioned problem of misalignment of the nozzle 6 with the nozzle cavity surface during insertion and positioning of the nozzle 6, and the associated scraping of material. In the depicted embodiment, fluid inlet port 8a opens into the third cylindrical portion 14.

The diameter D3 of the third cylindrical portion 14 is 3-7% smaller than the diameter D1 of the first cylindrical portion 12, but 3-7% larger than the diameter D2 of the second cylindrical portion 16 and the nozzle 6. The third cylindrical portion 16 having an intermediate diameter between the first and second cylindrical portions 14, 16 provides a less abrupt transition between nozzle portions, which allows successful alignment of the nozzle 6 with the second cylindrical portion 16 during insertion.

The axial length of the first cylindrical portion 12 may be between 50-75% of the axial length of the second cylindrical portion 16, whilst the axial length of the third cylindrical portion 14 may be between 30-60% of the axial length of the second cylindrical portion 12. In relation to the nozzle 6, the axial length of the second cylindrical portion 16 may be 90-120% of the axial length of the nozzle 6, whilst the axial length of the first cylindrical portion 12 may be 50%-75% of the axial length of the nozzle 6 and the third cylindrical portion 14 may be 30-50% of the axial length of the nozzle 6. These relative dimensions ensure that the second cylindrical portion 16 has sufficient axial length to accommodate the majority or all of the axial extent of the nozzle 6, such that it doesn't adversely interfere with the fluid flow in the nozzle cavity 10 (e.g. in the depicted example, such that it doesn't block port 8a); the third cylindrical portion is of sufficient axial length to allow successful alignment of the nozzle 6 with the second cylindrical portion 16; and the first cylindrical portion 12 is of sufficient axial length to provide easy insertion of the nozzle 6 into the nozzle cavity 10 without incurring undue misalignment.

The third cylindrical portion 14 is connected to the first cylindrical portion 12 by a first transition portion 13, and the third cylindrical portion 14 is connected to the second cylindrical portion 14 by a second transition portion 15. The depicted transition portions 13, 15 comprise chamfers, which provide a constant decrease in diameter across their length, to provide a smoother transition between the cylindrical portions 12, 14, 16 that further reduces the risk of the nozzle 6 having damaging interference with the nozzle cavity surface during insertion and positioning. However, in other embodiments, the transition portions 13, 15 could alternatively comprise any other suitable shape, such as a rounded surface or a step transition between the cylindrical portions 12, 14, 16.

In the depicted embodiment, there is also a third transition portion 11 that connects the first cylindrical portion 12 to the exterior of the nozzle housing 8. The third transition portion 11 may share the above discussed shape characteristics relating to the first and second transition portions 13, 15, and may provide easier initial insertion of the nozzle 6 into the nozzle cavity 10.

The nozzle housing 8 can be manufactured from any suitable manufacturing technique, such as casting, subtractive or additive manufacturing as would be apparent to the skilled person in the art. One example manufacturing technique is to cast the housing and use iterative drilling operations to create co-axial cavities of increased diameters (e.g. D2 to D3 to D1) at shorter drilling depths (e.g. portion lengths) to provide the nozzle cavity 10 with the first, second and third cylindrical portions. Alternatively, the housing 8 may be cast using appropriate moulds and inserts or build up layer by layer using a 3D printing additive manufacturing technique.

The depicted nozzle housing 8 may be made out of aluminium, whilst the nozzle 6 (which is normally exposed to harsher operating conditions) may be made of stainless steel, for example, stainless steel 304. These materials allow a flapper servo valve that can withstand the operating conditions necessary, whilst being relatively lightweight. Nonetheless, this material choice means the nozzle material is harder than the housing material, which may exacerbate the material scraping effect that can occur during nozzle insertion and positioning.

In some embodiments, at least a portion of the surface of the nozzle cavity 10 and/or nozzle 6 is anodised in order to reduce the friction generated between the nozzle 6 and the nozzle cavity 10 during insertion and positioning of the nozzle 6.

## Claims

1. A nozzle housing (8) for a flapper servo valve (1), the nozzle housing (8) comprising:
a nozzle cavity (10) for housing a nozzle (6), the nozzle cavity (10) comprising a first open end (10a) and an opposing, second open end (10b); and
a flapper cavity (8c) for housing a flapper (2), wherein the first open end (10a) opens to the exterior of the nozzle housing (8) and the second open end (10b) opens into the flapper cavity (8c), and the nozzle cavity (10) further comprises:
a first cylindrical portion (12) for receiving a nozzle (6) inserted into the nozzle cavity (10) from the first open end (10a);
a second cylindrical portion (16) configured to hold a nozzle (6) in its operating position;
a third cylindrical portion (14) positioned between the first and second cylindrical portions (12; 16) for centering a nozzle (6) prior to positioning in the second cylindrical portion (16), wherein the first, second and third cylindrical portions (12, 14, 16) are coaxial, and a diameter (D3) of the third cylindrical portion (14) is smaller than a diameter (D1) of the first cylindrical portion (12) but larger than a diameter (D2) of the second cylindrical portion (16);
a first transition portion (13) connecting the first cylindrical portion (12) to the third cylindrical portion (14); and
a second transition portion (15) connecting the third cylindrical portion (14) to the second cylindrical portion (16); **characterised in that**
the diameter (D3) of the third cylindrical portion (14) is 3-7% smaller than the diameter (D1) of the first cylindrical portion (12) and 3-7% larger than the diameter (D2) of the second cylindrical portion (16).

2. The housing of claim 1, wherein the first and second transition portions (13, 15) comprise a chamfer.

3. The housing of claim 1 or 2, wherein the nozzle housing (8) further comprises a fluid port (8a) that opens to the third cylindrical portion (14) to allow communication of fluid to the nozzle cavity (10).

4. The housing of claims 1, 2 or 3, wherein the axial length of the first cylindrical portion (12) is between 50-75% of the axial length of the second cylindrical portion (16), and the third cylindrical portion (14) is between 30-60% of the axial length of the second cylindrical portion (12).

5. The housing of any preceding claim, wherein at least a portion of the surface of the nozzle cavity (10) is anodised for reducing friction between a nozzle (6) and the nozzle cavity (10) during insertion and positioning of the nozzle (6) in the nozzle cavity (10).

6. The housing of any preceding claim, comprising aluminium.

7. A flapper servo valve (1), comprising:
the nozzle housing (8) of any preceding claim; and
a nozzle (6) disposed within the nozzle cavity (10).

8. The flapper servo valve of claim 7, wherein the nozzle (6) comprises a harder material than the nozzle housing (8).

9. The flapper servo valve of claim 7 or 8, wherein the nozzle (6) comprises stainless steel, for example, stainless steel 304.

10. The flapper servo valve of claim 7, 8 or 9, wherein at least a portion of the surface of the nozzle (6) is anodised for reducing friction between the nozzle (6) and the nozzle cavity (10) during insertion and positioning of the nozzle (6) in the nozzle cavity (10).

11. The flapper servo valve of any of claims 7 to 10, further comprising a flapper (2) disposed in the flapper cavity (8c).

12. The flapper servo valve of any of claims 7 to 11, further comprising a second nozzle cavity at an opposing side of the flapper cavity (8c) to the first nozzle cavity (10), and a second nozzle disposed in the second nozzle cavity.

13. A method of positioning a nozzle (6) in the flapper servo valve (1) of any of claims 7 to 12, the method comprising:
inserting the nozzle (6) into the nozzle cavity (10) via the first open end (10a);
moving the nozzle (6) axially through the nozzle cavity (10) from the first cylindrical portion (12) to the second cylindrical portion (16) via the third cylindrical portion (14), wherein the third cylindrical portion (14) acts as a guide to axially align the nozzle (6) with the second cylindrical portion (14) during the moving.

14. The method of claim 13, further comprising interference fitting the nozzle (6) in the second cylindrical portion (14) to hold the nozzle (6) in its operating position.

15. The method of claim 14, wherein the step of interference fitting the nozzle (6) in the second cylindrical portion (14) comprises using a calibration tool.

## Patentansprüche

1. Düsengehäuse (8) für ein Klappenservoventil (1), wobei das Düsengehäuse (8) Folgendes umfasst:
einen Düsenhohlraum (10) zum Unterbringen einer Düse (6), wobei der Düsenhohlraum (10) ein erstes offenes Ende (10a) und ein gegenüberliegendes, zweites offenes Ende (10b) umfasst; und
einen Klappenhohlraum (8c) zum Unterbringen einer Klappe (2), wobei das erste offene Ende (10a) sich zu dem Äußeren des Düsengehäuses (8) öffnet und das zweite offene Ende (10b) sich in den Klappenhohlraum (8c) öffnet, und wobei der Düsenhohlraum (10) ferner Folgendes umfasst:
einen ersten zylindrischen Abschnitt (12) zum Aufnehmen einer Düse (6), die ausgehend von dem ersten offenen Ende (10a) in den Düsenhohlraum (10) eingeführt wird;
einen zweiten zylindrischen Abschnitt (16), der dazu konfiguriert ist, eine Düse (6) in deren Betriebsposition zu halten;
einen dritten zylindrischen Abschnitt (14), der zwischen dem ersten und dem zweiten zylindrischen Abschnitt (12; 16) positioniert ist, um eine Düse (6) vor dem Positionieren in dem zweiten zylindrischen Abschnitt (16) zu zentrieren, wobei der erste, der zweite und der dritte zylindrische Abschnitt (12, 14, 16) koaxial sind und ein Durchmesser (D3) des dritten zylindrischen Abschnitts (14) kleiner ist als ein Durchmesser (D1) des ersten zylindrischen Abschnitts (12), jedoch größer ist als ein Durchmesser (D2) des zweiten zylindrischen Abschnitts (16) ;
einen ersten Übergangsabschnitt (13), der den ersten zylindrischen Abschnitt (12) mit dem dritten zylindrischen Abschnitt (14) verbindet; und
einen zweiten Übergangsabschnitt (15), der den dritten zylindrischen Abschnitt (14) mit dem zweiten zylindrischen Abschnitt (16) verbindet; **dadurch gekennzeichnet, dass**
der Durchmesser (D3) des dritten zylindrischen Abschnitts (14) 3-7 % kleiner ist als der Durchmesser (D1) des ersten zylindrischen Abschnitts (12) und 3-7 % größer ist als der Durchmesser (D2) des zweiten zylindrischen Abschnitts (16).

2. Gehäuse nach Anspruch 1, wobei der erste und der zweite Übergangsabschnitt (13, 15) eine Abschrägung umfassen.

3. Gehäuse nach Anspruch 1 oder 2, wobei das Düsengehäuse (8) ferner einen Fluidanschluss (8a) umfasst, der sich in den dritten zylindrischen Abschnitt (14) öffnet, um eine Kommunikation von Fluid an den Düsenhohlraum (10) zu ermöglichen.

4. Gehäuse nach den Ansprüchen 1, 2 oder 3, wobei die axiale Länge des ersten zylindrischen Abschnitts (12) zwischen 50-75 % der axialen Länge des zweiten zylindrischen Abschnitts (16) beträgt und der dritte zylindrische Abschnitt (14) zwischen 30-60 % der axialen Länge des zweiten zylindrischen Abschnitts (12) beträgt.

5. Gehäuse nach einem der vorhergehenden Ansprüche, wobei mindestens ein Abschnitt der Oberfläche des Düsenhohlraums (10) eloxiert ist, um eine Reibung zwischen einer Düse (6) und dem Düsenhohlraum (10) während der Einführung der Düse (6) in den Düsenhohlraum (10) und deren Positionierung darin zu reduzieren.

6. Gehäuse nach einem der vorhergehenden Ansprüche, das Aluminium umfasst.

7. Klappenservoventil (1), das Folgendes umfasst:
das Düsengehäuse (8) nach einem der vorhergehenden Ansprüche; und
eine Düse (6), die innerhalb des Düsenhohlraums (10) angeordnet ist.

8. Klappenservoventil nach Anspruch 7, wobei die Düse (6) ein härteres Material umfasst als das Düsengehäuse (8).

9. Klappenservoventil nach Anspruch 7 oder 8, wobei die Düse (6) einen Edelstahl, zum Beispiel den Edelstahl 304, umfasst.

10. Klappenservoventil nach Anspruch 7, 8 oder 9, wobei mindestens ein Abschnitt der Oberfläche der Düse (6) eloxiert ist, um eine Reibung zwischen der Düse (6) und dem Düsenhohlraum (10) während des Einführens der Düse (6) in den Düsenhohlraum (10) und deren Positionierung darin zu reduzieren.

11. Klappenservoventil nach einem der Ansprüche 7 bis 10, ferner umfassend eine Klappe (2), die in dem Klappenhohlraum (8c) angeordnet ist.

12. Klappenservoventil nach einem der Ansprüche 7 bis 11, ferner umfassend einen zweiten Düsenhohlraum an einer Seite des Klappenhohlraums (8c), die dem ersten Düsenhohlraum (10) gegenüberliegt, und eine zweite Düse, die in dem zweiten Düsenhohlraum angeordnet ist.

13. Verfahren zum Positionieren einer Düse (6) in dem Klappenservoventil (1) nach einem der Ansprüche 7 bis 12, wobei das Verfahren Folgendes umfasst:
Einführen der Düse (6) in den Düsenhohlraum (10) über das erste offene Ende (10a);
Bewegen der Düse (6) axial durch den Düsenhohlraum (10) von dem ersten zylindrischen Abschnitt (12) zu dem zweiten zylindrischen Abschnitt (16) über den dritten zylindrischen Abschnitt (14), wobei der dritte zylindrische Abschnitt (14) als eine Führung agiert, um die Düse (6) während des Bewegens mit dem zweiten zylindrischen Abschnitt (14) axial auszurichten.

14. Verfahren nach Anspruch 13, ferner umfassend ein Presspassen der Düse (6) in den zweiten zylindrischen Abschnitt (14), um die Düse (6) in ihrer Betriebsposition zu halten.

15. Verfahren nach Anspruch 14, wobei der Schritt des Presspassens der Düse (6) in den zweiten zylindrischen Abschnitt (14) ein Verwenden eines Kalibrierwerkzeugs umfasst.

## Revendications

1. Boîtier de buse (8) pour une servovanne à clapet (1), le boîtier de buse (8) comprenant :
une cavité de buse (10) pour loger une buse (6), la cavité de buse (10) comprenant une première extrémité ouverte (10a) et une seconde extrémité ouverte opposée (10b) ; et
une cavité de clapet (8c) pour loger un clapet (2), dans lequel la première extrémité ouverte (10a) débouche sur l'extérieur du boîtier de buse (8) et la seconde extrémité ouverte (10b) débouche dans la cavité de clapet (8c), et la cavité de buse (10) comprend en outre :
une première partie cylindrique (12) pour recevoir une buse (6) insérée dans la cavité de buse (10) à partir de la première extrémité ouverte (10a) ;
une deuxième partie cylindrique (16) configurée pour maintenir une buse (6) dans sa position de fonctionnement ;
une troisième partie cylindrique (14) positionnée entre les première et deuxième parties cylindriques (12 ; 16) pour centrer une buse (6) avant le positionnement dans la deuxième partie cylindrique (16), dans lequel les première, deuxième et troisième parties cylindriques (12, 14, 16) sont coaxiales, et un diamètre (D3) de la troisième partie cylindrique (14) est plus petit qu'un diamètre (D1) de la première partie cylindrique (12) mais plus grand qu'un diamètre (D2) de la deuxième partie cylindrique (16) ;
une première partie de transition (13) reliant la première partie cylindrique (12) à la troisième partie cylindrique (14) ; et
une seconde partie de transition (15) reliant la troisième partie cylindrique (14) à la deuxième partie cylindrique (16) ;
**caractérisé en ce que**
le diamètre (D3) de la troisième partie cylindrique (14) est 3 à 7 % plus petit que le diamètre (D1) de la première partie cylindrique (12) et 3 à 7 % plus grand que le diamètre (D2) de la deuxième partie cylindrique (16).

2. Boîtier selon la revendication 1, dans lequel les première et seconde parties de transition (13, 15) comprennent un chanfrein.

3. Boîtier selon la revendication 1 ou 2, dans lequel le boîtier de buse (8) comprend en outre un orifice de fluide (8a) qui débouche sur la troisième partie cylindrique (14) pour permettre la communication de fluide avec la cavité de buse (10) .

4. Boîtier selon les revendications 1, 2 ou 3, dans lequel la longueur axiale de la première partie cylindrique (12) est comprise entre 50 et 75 % de la longueur axiale de la deuxième partie cylindrique (16), et la troisième partie cylindrique (14) est comprise entre 30 et 60 % de la longueur axiale de la deuxième partie cylindrique (12).

5. Boîtier selon une quelconque revendication précédente, dans lequel au moins une partie de la surface de la cavité de buse (10) est anodisée pour réduire le frottement entre une buse (6) et la cavité de buse (10) pendant l'insertion et le positionnement de la buse (6) dans la cavité de buse (10).

6. Boîtier selon une quelconque revendication précédente, comprenant de l'aluminium.

7. Servovanne à clapet (1), comprenant :
le boîtier de buse (8) selon une quelconque revendication précédente ; et
une buse (6) disposée à l'intérieur de la cavité de buse (10) .

8. Servovanne à clapet selon la revendication 7, dans laquelle la buse (6) comprend un matériau plus dur que le boîtier de buse (8) .

9. Servovanne à clapet selon la revendication 7 ou 8, dans laquelle la buse (6) comprend de l'acier inoxydable, par exemple de l'acier inoxydable 304.

10. Servovanne à clapet selon la revendication 7, 8 ou 9, dans laquelle au moins une partie de la surface de la buse (6) est anodisée pour réduire le frottement entre la buse (6) et la cavité de buse (10) pendant l'insertion et le positionnement de la buse (6) dans la cavité de buse (10).

11. Servovanne à clapet selon l'une quelconque des revendications 7 à 10, comprenant en outre un clapet (2) disposé dans la cavité de clapet (8c).

12. Servovanne à clapet selon l'une quelconque des revendications 7 à 11, comprenant en outre une seconde cavité de buse sur un côté opposé de la cavité de clapet (8c) à la première cavité de buse (10), et une seconde buse disposée dans la seconde cavité de buse.

13. Procédé de positionnement d'une buse (6) dans la servovanne à clapet (1) selon l'une quelconque des revendications 7 à 12, le procédé comprenant :
l'insertion de la buse (6) dans la cavité de buse (10) par l'intermédiaire de la première extrémité ouverte (10a) ;
le déplacement de la buse (6) axialement à travers la cavité de buse (10) à partir de la première partie cylindrique (12) vers la deuxième partie cylindrique (16) par l'intermédiaire de la troisième partie cylindrique (14), dans lequel la troisième partie cylindrique (14) agit en tant que guide pour aligner axialement la buse (6) avec la deuxième partie cylindrique (14) pendant le déplacement.

14. Procédé selon la revendication 13, comprenant en outre l'ajustement serré de la buse (6) dans la deuxième partie cylindrique (14) pour maintenir la buse (6) dans sa position de fonctionnement.

15. Procédé selon la revendication 14, dans lequel l'étape d'ajustement serré de la buse (6) dans la deuxième partie cylindrique (14) comprend l'utilisation d'un outil d'étalonnage.
